# EUROPEAN PATENT APPLICATION

(11) **EP 1 263 108 A1**
(43) Date of publication of application: **04.12.2002**
(21) Application number: 02077096.2
(22) Date of filing: 29.05.2002
(51) Int. Cl.: H02J 3/00

(54) **Community energy comsumption management**

(30) Priority: 01.06.2001 GB 0113327; 17.09.2001 GB 0122383
(71) Applicant: Roke Manor Research Limited, Romsey, Hampshire SO51 0ZN (GB)
(72) Inventor: Edwin, Richard, Romsey, Hampshire S051 8PB (GB)
(74) Representative: Condon, Neil

(57) **Abstract**

A networked intelligent energy management system (NIEMS) (100) provides the capability for a community NIEMS server (150) to schedule jobs to be done in each household in a community, based on the availability, monetary cost and/or environmental cost of the energy required to complete a specific job, for example a washing cycle in a washing machine. NIEMS therefore smoothes the load placed on energy resources. In particular the system reduces the peak load on the energy supply. The system allows a community to make the best use of energy resources. The energy requirements and usage of the community can be tailored to favour usage of preferred and/or available energy resources.

## Description

The present invention relates to improvements in community energy consumption management.

In the following discussion, a community is considered to be a plurality of households, factory sites, public facilities or business premises, normally in close geographic proximity. For simplicity, the terms household and home can be assumed to refer to a broad range of smaller scale premises, for example: a flat in an apartment block; a shop in a shopping complex; a site within a business park; or a stock shed on a farm.

Energy consumption is a major world-wide concern, in particular the consumption of energy from fossil fuels. Not only is there a limited supply of fossil fuels but the consumption of fossil fuels causes pollution. National governments are increasingly under pressure to reduce their emissions of pollutants including greenhouse gases (of which CO₂ is a significant example). Environmental impact is not limited to pollution but includes the results of using water resources and the disturbance of ecosystems. Energy resources which are generally favourable to the environment in comparison to the use of fossil fuels, say the burning of coal or gas, will be referred to as "green energy resources" throughout the following text.

More efficient energy consumption has an important part to play in the reduction in emissions. The use of renewable and non-fossil fuel energy resources also has an important role. Examples of renewable energy resources include solar, hydroelectric, tidal, wind and thermal energy resources. The term "fossil fuels" refers broadly to coal, peat, wood, combustible waste, gas and oil. Although resources such as wood or waste may be considered renewable, their combustion generally produces polluting emissions.

It is therefore desirable to make the most efficient use of available green energy resources. Currently each individual household or business has complete freedom as to when they increase or decrease the load on an energy service provider. If a community has green energy resources available, it would be highly desirable that these resources should be used as efficiently as possible for the benefit of the community.

Many energy consuming jobs in the home need only be performed "at some time during the day". Where there is some freedom in the timing of a specific job, there is the opportunity to make the use of fuel more efficient simply by scheduling the time at which the job is done. Examples of household jobs which have some freedom in their timing include:
running a programme on a washing machine or a dishwasher; recharging an electric car; and the use of central heating systems and electric blankets. The appliances performing these tasks are sometimes termed "actors" in the prior art.

Businesses too involve some energy consuming jobs for which scheduling can be appropriate, for example: scheduling operation of water pumps in water pumping stations; recharging electric cars for employees; and powering air-conditioning and irrigation systems.

In recent years, the provision of so-called smart or intelligent homes has become a reality. A smart or intelligent home is a home in which the material environment of the home and domestic tasks are automated to a greater or lesser degree. Automation can range from simply initiating and halting pre-defined tasks through programmable applications to the provision of fully automated devices and networks of devices. Of course intelligent or smart systems can equally well be applied to a range of non-domestic implementations including material environment management systems for business premises.

In smart homes systems, it is possible for a management system to manage the energy consumption of individual household appliances to optimise the overall energy consumption of an entire household. Much of the potential for optimised energy consumption can be achieved when the smart home is provided with its own sources of energy: for example solar panels and wind turbines. These green energy resources can be provided as an alternative to (or in addition to) conventional energy resources and the smart management system must take account of the availability and costs of using energy from any one of the energy resources whether local to the household or externally supplied.

Naturally any energy management system must also consider the potential for energy storage for example (hot) water reservoirs, batteries and turbines. The energy management system of the present invention can take account of many factors relating to the energy storage means including: the type and number; the storage capacity; and the efficiency of energy conversion and storage.

Another challenge facing smart or intelligent devices is communication. To be able to communicate with one another, smart or intelligent devices must comply with the same communication standards: they must interface with one another using the same protocol and the same communication language. Examples of standards appropriate for smart homes include: CEBus, Echelon/LONworks, Home Bus System (HBS), BatiBus, European Home System (EHS) and European Installation Bus (EIB). One particular system which conforms to the European Installation Bus (EIB) Standard is the Siemens Instabus System. The standards are made to be compatible with the various media over which a smart system can be implemented, the media include dedicated wiring, (twisted pair wire, coax cables, fibre optics) but also wireless media (audio/video, radio frequency, infrared and power line communications systems). Increasingly implementations of smart systems have been made using standards familiar to users of personal computers: Plug 'n' Play (PnP) and the internet. Internet standards, notably Internet Protocol (IP), have been used with some success despite the concomitant requirement for each IP appliance to have its own unique IP address.

The Siemens Instabus System provides a plurality of sensor and actor devices which are in communication with one another by means of a bus. The term sensors loosely refers to devices which control, monitor and/or report, in other words devices which give instructions: examples include thermometers, thermostats, photometers and switches. As indicated earlier, the term actors refers to devices which in the main receive instructions: for example lighting installations, washing machines, heating appliances, and electric blinds.

Instabus sensors can detect external conditions: including speed and direction of the wind, outside temperature, humidity and brightness. Internal conditions can be monitored in a similar way; for example malfunction of appliances, the temperature of stored water, indoors air temperature and motion within rooms. Instabus is actually a decentralised event-controlled bus system so that, for example, lighting can be controlled in accordance with both the detection of a householder and a low ambient light reading on a photometric sensor provided within the house. Naturally Instabus, just like any other smart home system, can be overridden manually. The system allows the householder to interact through many paths, including commands typed at a data entry terminal or keypad, commands entered using a physical key, panic button commands or even voice commands. Instabus is equally applicable to household security systems and accessibility solutions for disabled people.

Messages are passed around the Instabus in accordance with a bus networking protocol suited to decentralised control. Other smart homes systems require a central management system and a different networking protocol. In these cases, the central management system is generally built around a computer which gathers information from sensors, including requests from householders, and instructs "actors" accordingly. The central management system may be considered as a server while each of the sensors and actors may be considered clients. Networking protocols more appropriate to centralised management systems with this client-server structure include IP.

Consider the electricity demands of a model smart home having access to a number of energy sources including a solar panel energy source and a national electricity grid. The smart home management system may manage a large number of energy consuming actors including a central heating system, ventilation ducts, lighting, a water heater, windows, doors, blinds, awnings, and other electrical appliances. Even without considering the source of the energy used the presence of smart technology means that the home management system can reduce energy waste. The climate in each room can be regulated so that when a householder opens a window the management system recognises that event and responds by lowering the temperature of radiators in that room. On a larger scale, the smart home system can be applied to the whole house so that if the house is left unoccupied for a period of time the house will enter an unoccupied default state: rooms would be heated enough to avoid frost damage in pipework but not enough for human comfort.

Smart homes systems allow scheduling of jobs performed across the entire house. This often results in savings due to increasingly efficient use of available resources. Unfortunately when a community of smart homes is considered together, the supply of energy to the community takes no account of the further efficiency or environmental cost savings which might be possible for the community as a whole. Energy management on a house by house basis results in patchy or granular efficiency savings and can be highly dependent upon household specific constraints.

It is therefore an object of the invention to obviate or at least mitigate the aforementioned problems.

In accordance with one aspect of the present invention, there is provided an energy management system for managing energy usage in a community and determining from which of a plurality of energy resources to demand energy, the energy management system comprising: at least one local service area having a local server means and at least one energy consuming unit connected to said local server means, each energy consuming unit operable to perform at least one task; and a community server means, which manages the provision of energy resources across each of said at least one local service areas within the community; whereby said community server means is arranged to receive from each local service area task data indicative of at least one indicated task, each indicated task being associated with a corresponding one of said energy consuming units, and whereby said community server means manages the provision of energy resources in order to complete performance of said indicated tasks in said local service areas in accordance with a community energy usage strategy.

The present invention can therefore increase the efficiency at which different types of resources can be used and can allow a community to manage the usage of the different types of resources in parallel. Notably the invention allows communities to favour the use of green energy resources over other resources when appropriate. In a community containing a plurality of households (or businesses) each participating household allows a community server to have a degree of control over when or how the household can use energy. Where each household concedes some control over energy usage to the community server, the community as a whole can benefit both by making better use of available or preferred resources and by enabling the community as a whole to bid for access to external resources as a block.

An energy resource may be considered preferable for many reasons, for instance: the energy resource might be local to the community; the energy resource would otherwise be wasted; the energy resource is renewable or produces less pollution; or the energy resource may simply be the cheapest available in monetary terms. In the case of a community bidding, external resources are those resources which are not local to the community for instance mains gas and National Grid electricity supplies. Often external resources are not 'preferred' energy resources because the majority of the energy will originate in the conventional, non-renewable sector of energy production.

The networked communication may be a wired network which operates in accordance with a networking protocol. The protocol is advantageously the internet protocol (IP). Alternatively the networked communication may be a wireless network which operates in accordance with a wireless networking protocol.

Preferably at least one of said energy consuming units is intelligent.

It is preferred that the community server manages the provision of energy resources by processing said task data and scheduling the times at which the or each indicated task is performed by said corresponding one of said energy consuming units.

Each of the given tasks may have an associated deadline time by which the task must be performed and the community server may schedule the times at which each task is performed to avoid any task being performed after the associated deadline time.

Advantageously the community server means may also bid for energy resources from external energy resources on behalf of the community. The external energy resource may be the National Grid.

One benefit of the present invention is efficient use of energy resources by individual communities and a similar improvement in the efficiency of nationally supplied energy resources, for instance the National Grid and gas supplies. The peak load on the National Grid can be reduced while the overall manageability of the Grid can also be improved. In addition, individual communities can operate the inventive system to reduce their greenhouse gas emissions.

For a better understanding of the present invention, reference will now be made, by way of example only, to the accompanying drawings in which:
Figure 1 illustrates a wired networked energy management system in accordance with the present invention;
Figure 2 illustrates the form of requests gathered and stored by the home servers in the system of Figure 1;
Figure 3 illustrates an appropriate data structure for a job request;
Figure 4 illustrates a preferred scheme for the development of a community strategy in accordance with the present invention;
Figure 5 illustrates two complementary schemes for the development of a community strategy in accordance with the present invention;
Figure 6 illustrates two complementary schemes for relaying instructions from a community server in accordance with the present invention; and
Figure 7 shows the contrasting data structures of job requests and digests.

Community energy management systems can be provided using either wired or wireless networks or even a combination of the two types of network. Thus it is perfectly possible to have one household provided with a wireless network and connected to the community as a whole through a wired community network.

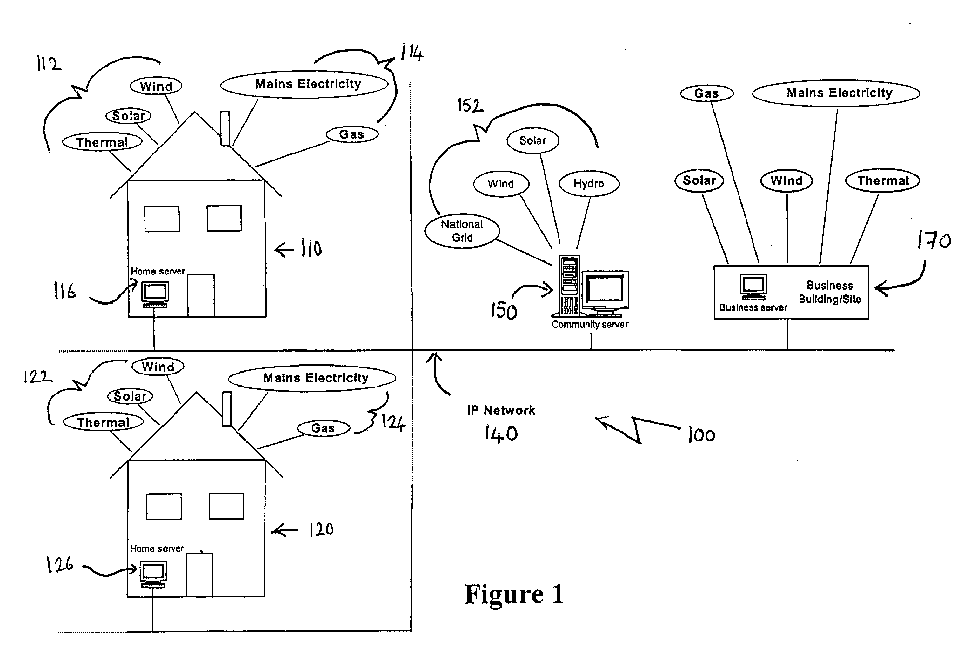

Figure 1 shows a Networked Intelligent Energy Management System (NIEMS) 100 for a community of smart 'homes' 110,120,170. The system comprises a plurality of home servers 116,126 networked through a wired network 140 to a community NIEMS server 150. Actors and sensors within each house 110,120 are not shown in the figure but are connected to the home server 116,126 via conventional media.

Each appliance under NIEMS control has a networked connection to the home server 116,126 and may be controlled by a remote computer over the networked connection. The community NIEMS server 150 has a networked connection to the home server 116,126 in each household 110,120 under NIEMS control.

The networked communication in the illustrated embodiment is a wired network 140 operating in accordance with the Internet Protocol (IP) - the network connection is therefore termed an IP network. Each actor or sensor has a corresponding embedded IP (or web) server as is well known.

When a user wants a job to be done in a NIEMS controlled house 110,120, for example a washing machine cycle, then the user requests that job in the home server 116,126.

Each home server 116,126 then sends the request (or requests) to the community server 150. The community server 150 therefore collects all the job requests from each household 110,120 in the community and can start to schedule the jobs. The scheduling is intelligent in the sense that alterations in sensed environmental conditions can be responded to automatically. In consequence, the community server 150 can be used to select between the different sources of energy available to each house individually: renewable sources 112,122 including solar, wind and hydroelectric power and 'traditional' forms of energy 114,124 including the National Grid, geothermal and gas sources. Selection of energy resources may be made according to territorial, purely environmental or purely monetary strategies or they may be made according to some combination of strategies, especially if there are insufficient cost-effective green energy resources available. The jobs may be scheduled in accordance with numerous factors including: demand; the availability of renewable energy; and the current cost of energy.

The community server 150 is also arranged to be able to bid as a community for access to a broader range of energy resources: for instance wind power, solar power, hydroelectric power and even National Grid power 152 can require a certain minimum demand level before price reductions will be offered. The community server 150 is also shown networked to a business building/site 170 which has its energy consumption controlled in a similar fashion to the energy consumption of a domestic household.

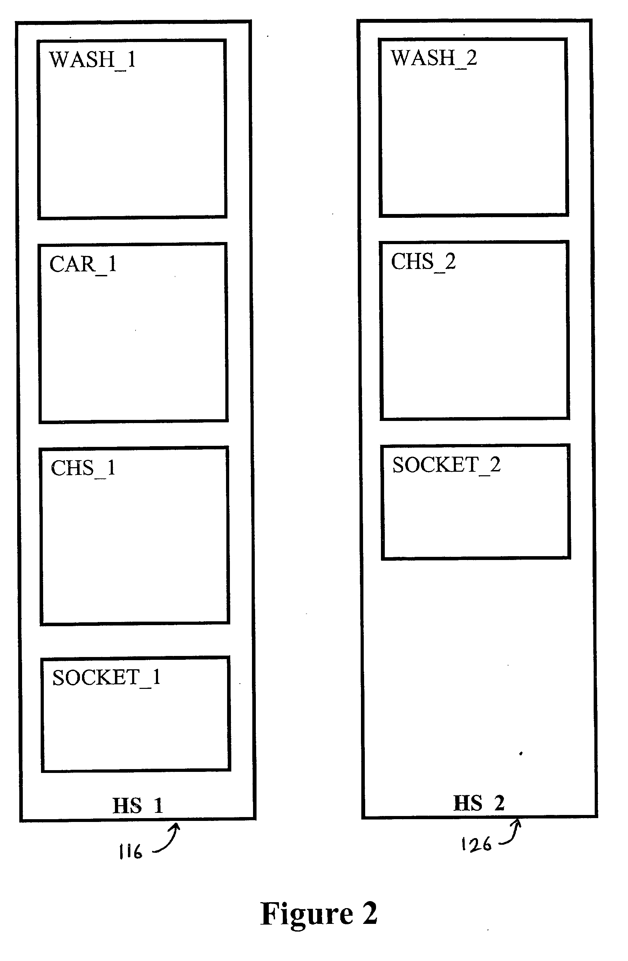

Figure 2 illustrates the form of requests gathered and stored by different home servers 116, 126 in the system of Figure 1.

More than one job can be requested at any one time. Individual job requests are therefore gathered and stored by each home server. The individual job requests currently stored on Home Server 1 (HS_1) include a wash cycle request (WASH_1), a car charge request (CAR_1), a central heating system request (CHS_1) and a smart socket request (SOCKET_1). Likewise the job requests currently stored on Home Server 2 (HS_2) include a wash cycle request (WASH_2), a car charge request (CAR_2) and a smart socket request (SOCKET_2). As will be understood, each request can include scheduling and priority information, for instance when the user wants a specified job to be completed by. Timing constraints of various kinds can be expressed in requests. The user may require that a job is delayed until a certain time, is completed by a certain time or is paused at a certain stage of task execution: in any case imposing a constraint introduces a time window for completion of the job.

Requests can additionally or alternatively include rules, for example "if the weather is very cold turn up central heating". Another example of an energy efficient rule would be to make the scheduling of one task dependent upon the scheduling of another task, in the case of washing cycles this might be expressed as a rule to heat water just in time for the beginning of wash cycles in each household for which a wash cycle is scheduled.

Where households have differing demands and differing access to energy resources, the different constraints and rules which each household may express in relation to energy consumption may be synthesised to generate a tailor-made scheduling of energy consuming (and generating) tasks across a community as a whole.

With individual smart homes, any one of the actors can access electricity from any of the energy sources available to the home. Across a community, energy sources can be shared out in an efficient and intelligent way.

Consider an illustrative scenario, in which there is sufficient solar power available to a whole community for only one washing machine at a time. The community server can schedule the washing machine cycles in each household to be completed during the day in series, one after the other. If however there is not enough solar energy, then the jobs can be put on hold until there is sufficient energy. Ultimately each household does require a wash cycle to be completed before a given time and the community server must account for this. The community server therefore assigns a time of last resort such that the job must be started in order to complete before the given time. At the time of last resort the management system can start the job using whatever source of energy there is available at the time, selecting the cheapest source in terms of either monetary cost or environmental cost and bypassing the insufficient supply from the solar energy source.

A suitable algorithm for scheduling washing machine cycles has a number of steps:
a determining step in which the algorithm derives resource information regarding any available resources, thereby determining how many resources are available and how much energy is presently available for each resource;
a prediction step in which the algorithm derives prediction information regarding availability of energy in the future, thereby allowing for variability in energy sources, for example sunlight, wind strength, tides and temperature;
an update step in which the resource information is updated with prediction information thereby indicating the available energy based on predicted availability of energy;
a request step in which job request information is gathered, wherein for example the number, duration and timing of job requests is established;
a decision step in which the algorithm chooses a preferred energy resource for the scheduled jobs in accordance with the updated resource information and the job request information; and
a scheduling step in which a job schedule is generated for scheduling the requested jobs to use the resource as efficiently as possible.

In the illustrative scenario, the community has access to electricity supplies from two resources: solar energy and the National Grid. Each washing cycle consumes T kW/h and has a duration of W hours. As shown in Table 1, each resource has its own characteristics.

**Table 1**

| Energy source | Current availability (kW/h) | Predicted availability (kW/h) | Cost of energy resource | Additional cost per kW |
|---|---|---|---|---|
| Solar Energy | ≤ T | Depends upon weather and season | X | Y |
| National Grid Electricity | >T | Remains constant | >X | <Y |

Solar energy generates a variable amount of electricity throughout a day. When applying the scheduling algorithm, the prediction step might involve generating a graph of the predicted availability (e.g. increases during sunny afternoon). On the other hand, the National Grid can be assumed to be a source of a constant power.

As Table 1 summarises, there is sufficient solar power available to the whole community for only one washing cycle at a time. If two households, Household 1 and Household 2, were to request wash cycles within 3W and 2W hours respectively, the community server can schedule the washing cycles to run consecutively: with Household 2 starting in W hours and Household 1 starting in 2W hours. The community server can thereby ensure that all the electricity supply is drawn from the solar energy source. Should the solar power source produce less than T kW/h, due perhaps to unpredictable weather conditions, the community server can draw sufficient additional power from the National Grid to guarantee that the cycles are finished uninterrupted. Should the solar power source produce 2T kW/h or more, due perhaps to fortuitous alignment of the solar panels with strong sunlight, both job requests can naturally be carried out simultaneously using green energy resources alone.

If however Household 1 and Household 2 were both to request washing cycles for completion within a shorter time frame, say W hours, and only T kW/h is available from the solar power source, there will be no time to schedule consecutive cycles. The community server will instead permit both cycles to run at the same time ensuring that at least T kW/h is still drawn from the solar energy source while the remaining power will be drawn from the National Grid.

Intelligent scheduling works for conventional energy consuming devices but a further enhancement in efficiency can be achieved through the integration of intelligent appliances within each household (or business unit) area. Thus in Figure 2, both home servers have received requests from intelligent sockets (SOCKET_1, SOCKET_2) which at the least allows the smart home system to switch conventional, non-smart devices off and on.

If a local area, domestic or business, contains intelligent appliances, these appliances can be integrated with the home server. Each intelligent appliance in the local area may provide an energy consumption model (ECM) to the home server. Energy consumption models may be included in the individual job requests or alternatively may be supplied separately at the request of the home server or the community server. Each energy consumption model includes information which has been sensed or otherwise input into the intelligent appliance, for example the time taken to complete a job, energy consumed, and/or possible times when job can be paused.

The energy consumption model may be stored by the intelligent appliance themselves and provided by the appliance to the home server when a user requests a job. Alternatively, the model may be configured and stored by the user in the associated home server: as in the case where the appliance cannot itself provide an energy consumption model. In either case, the model is sent to the community server within job request messages. The same scheduling process can be implemented irrespective of the origin of the energy consumption model provided to it by the home server.

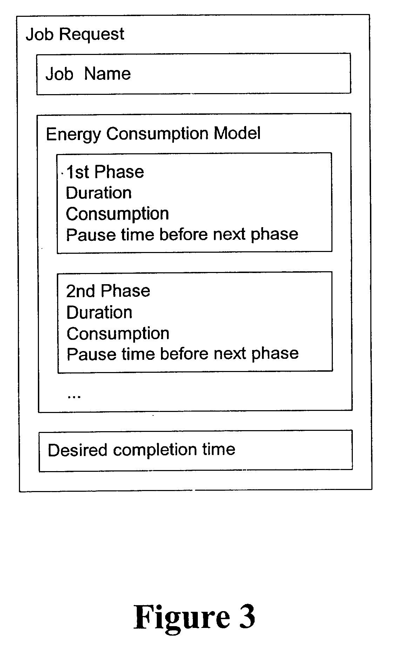

Figure 3 demonstrates an appropriate structure for a job request. The illustrated job request includes a job name, an energy consumption model and a desired completion time.

In certain implementations, energy consumption models can themselves be formed from one or more phase models. In Figure 3, each phase model includes: a phase name; a duration; consumption data, for example data showing consumption in detail throughout the duration of the phase; and a pause time before next phase, where necessary.

Each phase of an energy consumption model can represent a particular portion of an operation pattern of an appliance. Consider the example of a washing machine: any wash cycle will involve a number of distinct phases, for instance rinse, wash and spin cycles. Each phase will correspond to distinct energy consumption patterns and will take a certain amount of time to complete. It may be possible or even desirable to pause operation of the washing machine between some of these phases, between wash and spin cycles for example.

The washing machine example above can be used to illustrate how energy consumption models having more than one phase can be implemented.

**Table 2**

| Phase of job | Duration | Consumption | Pause time before next phase |
|---|---|---|---|
| phase1 | J hours | I kW/h | 30mins |
| phase2 | W hours | T kW/h | 0mins |

The washing cycle job illustrated in Table 2 comprises two phases, phase1 and phase2. The duration field states how long each phase lasts. The consumption field states how much energy is required. It is remarked that the energy consumption field is not necessarily constant over time and could be represented as a time-dependent function. The 'pause time before next phase' field represents the maximum time allowed once this phase has been completed before the next phase can start. After a washing phase (phase1), the community server could pause the washing machine for 30 minutes before starting the spin phase (phase2) of the wash cycle. During this pause the energy available to the community could be used for another job.

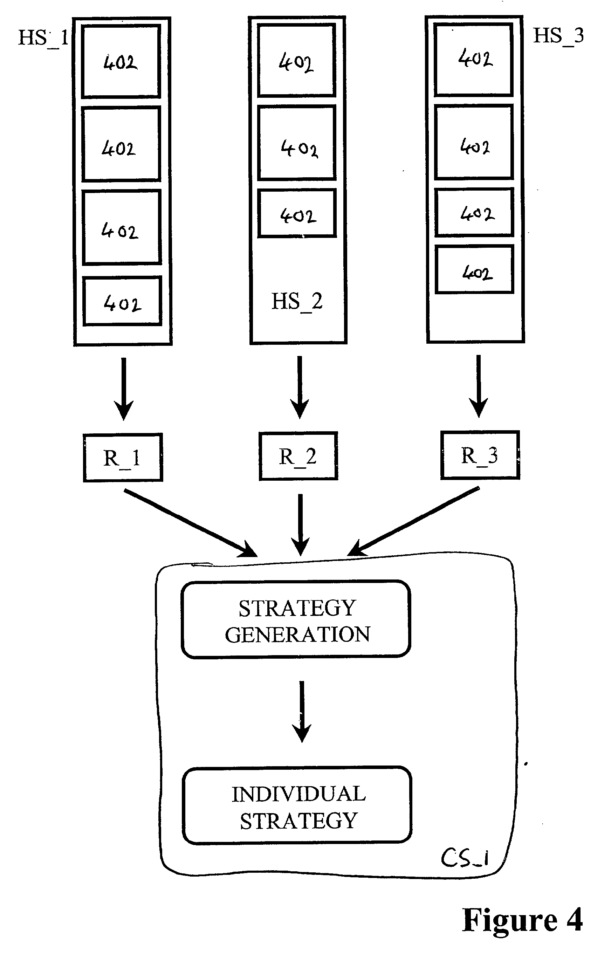

Figure 4 demonstrates one scheme for the development of a community strategy. Each requested task (402) stored on the home servers (HS_1, HS_2, HS_3) of each household has an associated energy consumption model (see Fig. 3). The energy consumption models may be sent with the request from an appropriately configured appliance, say an intelligent "actor". The energy consumption models may alternatively be stored on the home server for incorporation with a corresponding job request lacking a consumption model. No knowledge of whether the models are stored on individual appliances or in home servers is necessary for the scheduling strategy to be effective.

Each home server (HS_1, HS_2, HS_3) gathers and collates the information from each of the job requests submitted to it.

Each home server then generates a report (R_1,R_2,R_3) based on the collated information and transmits the report to a community server (CS_1) across a network. The community server in turn processes reports from each home server and generates a community scheduling strategy.

Even if a given appliance were not intelligent, an appropriate energy consumption model could be configured and stored on the home server or even input into the home server by the user when necessary. Intelligent mains sockets could be used to switch such appliances on or off. The intelligent mains sockets could then provide energy consumption information to the home server.

It is possible to arrange for generation of limited models of the energy consumption of non-smart devices either through empirical results from previous jobs, from manufacturers technical details or from manual entries made by householders. For each job, the home server can be configured with the limited model: the information generally available using an intelligent mains socket might include available time to complete and average energy consumption information. A report based on the limited model would then be sent via the network to the community server during the job request procedures.

In an IP network the intelligent mains sockets could be described as web-enabled sockets. Intelligent appliances can interface with the home IP network by means of their own embedded web servers.

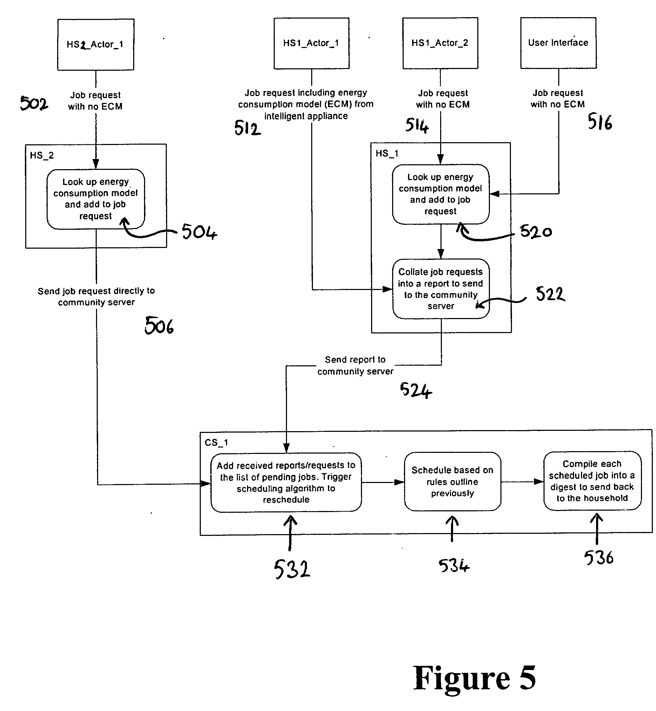

In Figure 5, an alternative scheme for the development of a community strategy is contrasted with the scheme of Figure 4.

The scheme of Figure 4, whereby job requests become part of a home server's report, are shown in more detail in Figure 5. The job request may originate with an appliance which can independently supply an energy consumption model (512). Such a job request will simply be collated with other "complete" job requests in the final report.

It may be expected that other job requests may originate with appliances which can not supply energy consumption models (514,516). The user may be the originator of such a request as may a "non-smart" appliance. An appropriate energy consumption model is then recovered from configurations stored on the home server and is added to each ECM-less request (520) to generate "complete" job requests.

Complete job requests, however they are derived, are collated into a final report (522) and only then sent on (524) to the community server (CS_1).

Under the alternative scheme, job requests are addressed directly to the community server (CS_1) without the generation of a report. Where a job request lacks an energy consumption model (502) the associated home server is consulted and the relevant energy consumption model is incorporated within the job request (504). The community server (CS_1) in this scheme must be arranged to receive job requests directly and as each request arrives (506); in other words, dynamically.

In summary, Figure 5 shows two schemes by which job requests can be directed to a community server. Whether job requests are addressed dynamically to the community server or reports are assembled on each home server before forwarding to the community server at discrete intervals, the community server receives requests or reports and initiates a scheduling algorithm (532). The algorithm results in the generation of a scheduling strategy (534) and instructions are passed back either directly to the relevant actors or via the home servers (536).

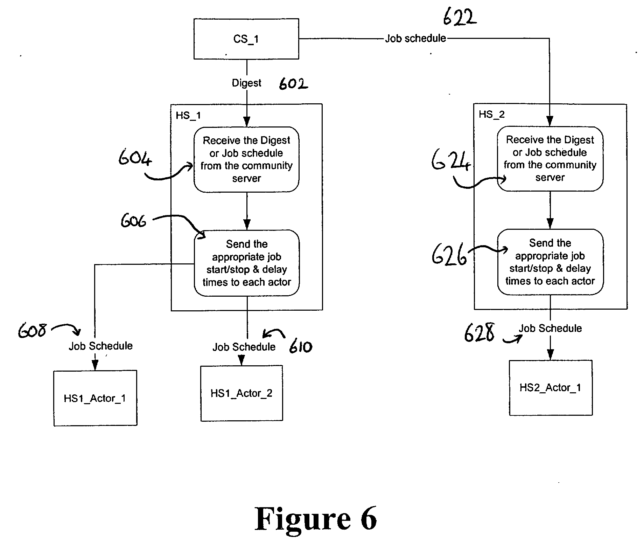

The possible results of the scheduling algorithm are illustrated in Figure 6. Two complementary schemes for relaying instructions from the community server back to the home servers and ultimately to the actors are shown.

The first scheme makes use of digests. The scheduling algorithm running on the community server results in at least one digest of instructions which is addressed to the appropriate home servers (602). The instructions contained in the digest are directed to some or all of the actors the addressed home server has control over. Upon receipt of a digest (604), each home server then processes the digest (606) to separate out individual job schedule instructions from within the digest and transmits the individual job schedules to the relevant actors (608,610). The individual job schedule instructions include start/stop and delay times for each job.

The second scheme is more direct and uses individual job schedules sent directly from the community server (CS_1). In this scheme the scheduling algorithm results in individual job schedules (622) which are simply received (624), processed (626) and routed to the appropriate actor (628) by the appropriate home servers.

In the first scheme digests are sent to each participating home server at regular intervals, say twice daily. The individual home servers then take control of the management of appliances within their household.

In the second scheme each new request sent to a home server results in an update of the scheduling. When appropriate, schedules can be dynamically updated to take account not only of the requests within the same house but across the whole community. Alternatively, each new request is responded to centrally by the community server with either a confirmation that the request can be carried out or a suggestion that the requested task be delayed (or brought earlier). In the latter case the scheduling process can act like an appointments diary: first available time slots are filled as required then the time slots are rearranged under whatever time constraints are imposed.

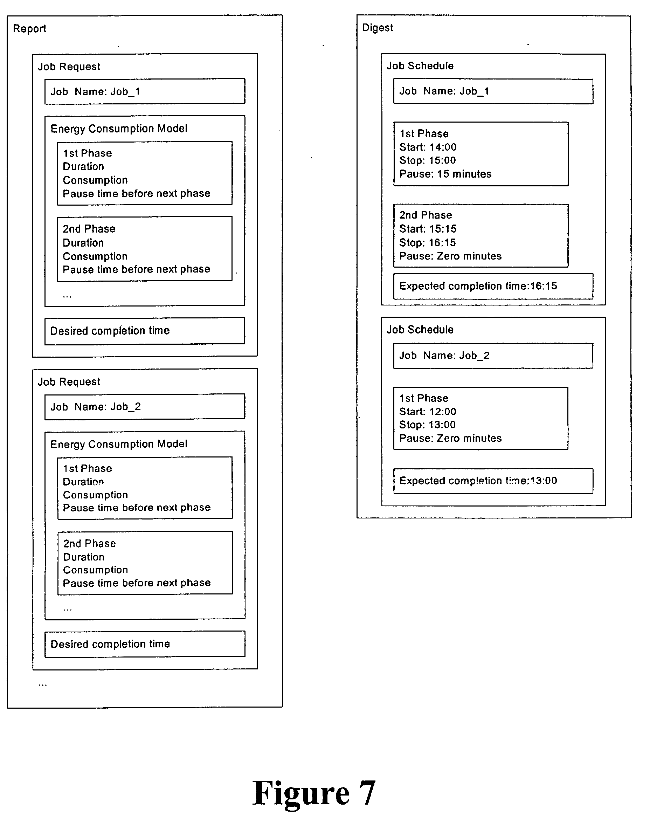

The formats of reports and digests are contrasted in Figure 7. The scheduling algorithm takes the duration, pause and desired completion times of each request and generates schedules which instruct individual actors: when to start actions; when to stop; and what length of pause can be applied between successive phases of activity. The specific start, stop and pause times for each individual phase of each job are incorporated within a schedule for that job along with details of when the scheduling algorithm expects the task to be completed. A digest is formed from the collation of one or more of these individual job schedules and is addressed to a single home server.

By scheduling energy consumption for a whole community, the community server can bid for external sources of energy at cheaper tariffs. The bidding can take place at any convenient time of day thus strengthening the community's bargaining hand.

The NIEM system can also surrender a degree of control to certain larger scale management systems. If the community server is linked to the National Grid management system it is possible for the Grid to request that the community server start a job to provide load on demand or stop/delay a job to reduce the load on the Grid. The community server can automatically provide the National Grid with an estimate of the anticipated load on the Grid. This will in turn allow better management of the National Grid. On a large scale, providing load on demand could mean that the community NIEMS server could provide synchronous compensation for the grid. Synchronous compensation is a term used in the power generation industry to refer to the necessary generation of reactive power in the provision of a stable and level national electricity supply.

Although the preceding discussion concentrates upon centralised management, the Networked Intelligent Energy Management System of the present invention is not limited to a centralised community management system. Servers representing each household in a community can be arranged to negotiate for energy resources on behalf of their respective households in a decentralised energy resource management system. Reports submitted by representative servers are provided with negotiating functionality so that there need be no single community server device. Any one of the representative servers may act as the community server for any one task scheduling job.

Throughout the preceding discussion the NIEM system is said to allow community energy usage to be tailored to favour usage of preferred and/or available energy resources. It will be understood that while the preceding discussion was directed at the preferential selection of green energy resources the invention can equally be applied to a system for preferring the resource which is generated most locally, has the least monetary cost attached or which optimised the performance of certain tasks in preference to other tasks.

## Claims

1. An energy management system for managing energy usage in a community and determining from which of a plurality of energy resources to demand energy, the energy management system comprising:
a plurality of local service areas each having at least one energy consuming unit, each energy consuming unit operable to perform at least one task; and
a community server means, which manages the provision of energy resources across each of said local service areas within the community;
whereby said community server means is arranged to receive from each local service area task data indicative of at least one indicated task, each indicated task being associated with a corresponding one of said energy consuming units, and whereby said community server means manages the provision of energy resources in order to complete performance of said indicated tasks in said local service areas in accordance with a community energy usage strategy.

2. An energy management system in accordance with Claim 1, wherein at least one of said energy consuming units is intelligent.

3. An energy management system in accordance with Claims 1 or 2, wherein the community server manages the provision of energy resources by processing said task data and scheduling the times at which the or each indicated task is performed by said corresponding one of said energy consuming units.

4. An energy management system in accordance with Claim 3, wherein each of the given tasks has an associated time by which the task must be performed and the community server schedules the times at which each task is performed to avoid any task being performed after the associated deadline time.

5. An energy management system in accordance with any one of the preceding claims, wherein the community server means bids for energy resources from external energy resources on behalf of the community.

6. An energy management system in accordance with Claim 5, wherein the external energy resource is the National Grid.

7. A method for scheduling performance of a plurality of tasks in accordance with a community energy usage strategy, said method having the following steps:
a determining step in which resource information regarding resources available to a community is derived;
a request step in which job request information is gathered;
a decision step in which a preferred energy resource for the scheduled jobs is determined in accordance with the resource information and the job request information; and
a scheduling step in which a job schedule is generated for scheduling the requested jobs to use the resource as efficiently as possible.

8. The method of Claim 7, further comprising a prediction step in which prediction information regarding future availability of energy to a community is calculated and an update step in which the resource information is updated with prediction information.

9. An energy management system substantially as hereinbefore described with reference to the accompanying drawing.
